# EUROPÄISCHE PATENTANMELDUNG

(11) **EP 2 500 155 A2**
(43) Veröffentlichungstag der Anmeldung: **19.09.2012**
(21) Anmeldenummer: 12000370.2
(22) Anmeldetag: 20.01.2012
(51) Int. Cl.: B27N 3/24, B29C 43/48, B29C 70/50, B32B 9/02, D06N 7/00, B32B 37/24, E04F 15/10

(54) **Polymer gebundene Bahn sowie Verfahren zu deren Herstellung**

(30) Priorität: 20.01.2011 DE 102011008974
(71) Anmelder: TPS TechnoPartner Samtronic GmbH, 73037 Göppingen (DE); Scholz, Karl-Heinz Peter, 63768 Hösbach (DE)
(72) Erfinder: Mauk, Hanns-Jörg, Dr., 79395 Mundelsheim (DE); Voith, Bernhard, 73113 Ottenbach (DE); Fischer, Bernd, 71711 Murr (DE); Scholz, Karl-Heinz Peter, 63768 Hösbach (DE)
(74) Vertreter: Fürst, Siegfried

(57) **Zusammenfassung**

Die Erfindung betrifft ein Verfahren zur Herstellung einer, aus im Wesentlichen aus Granulat und einem Polymer bestehenden, Bahn. Damit die Bahn nach ihrem Verlegen auf einem Fussboden sich gut an die Unterlage ansaugt, dürfen die Zwischenräume zwischen den Granulat-Partikeln nicht mit dem Polymer ausgefüllt sein. Erfindungsgemäß wird dieses dadurch bewerkstelligt, dass das Polymer auf die Oberseite des Granulates ausgebracht wird. Nach dem Aufschmelzen des Polymers sickert das Polymer durch das Granulat nach unten. Durch eine gezielte Steuerung oder Regelung wird dieser Sinkprozess vor dem Erreichen des Polymers an der Unterseite der Bahn beeinflusst. Die Erfindung umfasst auch einen Sensor und das Produkt an sich.

## Beschreibung

Die Erfindung betrifft ein Verfahren gemäß dem Oberbegriff des Anspruches 1, einen Sensor gemäß Anspruch 5 und eine Bahn gemäß dem Oberbegriff des Anspruches 8.

Aus dem Stand der Technik sind Verfahren bekannt, mittels deren man in einem thermoplastischen Herstellungsverfahren Granulate zwischen zwei umlaufenden Bändern erwärmt, presst und danach abkühlt. Auch ist bekannt, dass nicht-schmelzbare Granulate mit einem schmelzbaren Polymer miteinander zu einer Bahn verbunden werden. Als Schriften hierzu seien die Schriften DE 197 51 516 C2 und DE 103 16 695 B4 genannt.

In diesen Herstellungsverfahren wird zwischen einem unteren und einem oberen umlaufenden Band ein Granulat (oder auch Fasern Agglomerate und Mischungen davon) gestreut. Die Bänder werden zunächst von ihren Außenseiten her beheizt, wodurch das Granulat plastisch bis zähflüssig wird. Weil sich die Bänder im weiteren Verlauf des Fertigungsprozesses, beziehungsweise ihrer Bewegung immer mehr annähern, wird das in den fließfähigen Zustand übergegangene Granulat immer mehr verdichtet und es bildet sich eine zusammenhängende und geglättete Bahn. Die Verdichtung erfolgt hierbei auch durch die auf der Außenseite der Bänder aufliegenden Heizelemente. Im weiteren Verlauf der Fertigung gibt es wiederum ebenfalls außen auf den Bändern aufliegende Kühlelemente. Am Ende der Fertigungsmaschine wird dann die so gebildete Bahn entweder auf einem Haspel aufgewickelt oder es werden einzelne Platten abgelängt und gestapelt.

Auch gibt es Granulate, die selbst nicht schmelzbar sind, aber auf einer eingangs bereits erwähnten Fertigungsmaschine mittels eines schmelzbaren Materials miteinander verbunden werden können. Dieses schmelzbare Material ist dann ein Polymer, oder ein anderer polymerer Stoff, oder auch ein beliebig anderes schmelzbare Material, welcher/welches nachfolgend aber hier immer als Polymer bezeichnet wird.

Als ein Bespiel für ein nicht-schmelzbares Granulat soll hier der Kork genannt werden. Bei dem Verbinden des Korkgranulates mittels eines Polymers sinkt das verflüssigte Polymer in die Lücken zwischen dem Granulat, wobei die Fließgeschwindigkeit vorwiegend von dem Prozesstemperatur-Verlauf, der Streudichte, der Teilchengrößenverteilung des Granulats und dem thermischen Viskositätsverhalten des Polymers gesteuert wird.

Bei Bahnen, die als Auslegeware verwenden werden, wünscht man sich eine gewisse Selbsthaftung der Bahn auf dem Untergrund. Beim Auslegen der Bahn spricht deshalb der Fachmann auch vom Ansaugeffekt. Sind die Poren - beispielsweise bei einer Bahn aus Korkgranulat - aber bis zur Unterseite der Bahn mit dem Polymer gefüllt, so gibt es den Ansaugeffekt nicht oder ist stark vermindert. Dieses wird dadurch erklärt, dass an der Unterseite einer derartigen Bahn zwischen dem und in dem Granulat keine kleinen Luftkammern vorhanden sind. Beim Verlegen der Bahn und dem dabei erfolgenden Andruck entleeren sich die Luftkammern durch das Eigengewicht der Bahn und/oder durch Auflast, wobei wegen der Elastizität des umgebenden Materials und der damit verbundenen Rückstellung ein kleines Vakuum entstehen kann.

Es ist deshalb Aufgabe der Erfindung, ein Verfahren und eine Bahn zu finden, bei dem bei der Herstellung dieser Bahn ein Granulat mittels eines Polymers gebunden wird, aber diese Bahn trotzdem den Ansaugeffekt aufweist.

Die Aufgabe wird mit einem Verfahren mit den Merkmalen des Anspruches 1 gelöst. Der Kern der Erfindung ist, dass das Polymer von oben auf das Granulat aufgebracht wird (als Polymer-Folie, Vlies, Fasern, Pulver oder auch einer Kombination davon) und der Sinkprozess des flüssigen Polymers hierbei sehr genau gesteuert oder geregelt wird, so dass an der Unterseite der Bahn offene Poren bleiben.

In einer Ausgestaltung der Erfindung werden die Parameter der Produktion, wie z.B. die Produktionsgeschwindigkeit (also die Geschwindigkeit der Bänder der Fertigungsmaschine), Bahndicke, Granulatgröße, Polymermenge je Quadratmeter, Polymer-Temperatur, Polymer-Viskosität bei dieser Temperatur und Fertigungsdruck der Bänder durch umfangreiche Messreihen gewonnen und dann in der Steuerung der Maschine eingestellt.

In einer weiteren Ausgestaltung der Erfindung wird der Sinkprozess - und damit das Vorhandensein der Luftzwischenräume zwischen dem unteren Granulat - geregelt. Dieses ist aber nur mit einem Sensor möglich, der die erforderliche Sollgröße liefert. Im Rahmen der hier vorliegenden Erfindung wurde auch ein Sensor gefunden, mit dem man den Ansaugeffekt messen kann. Erfindungsgemäß wird der Sensor mit einer Öffnung an die Unterseite der Bahn gehalten. Die Öffnung wird dann entweder mit Überdruck oder Unterdruck beaufschlagt. Die Abweichung vom experimentell gewonnenen Druck wird gemessen und ist dann ein Maß für den Ansaugeffekt und damit die Sollgröße der Regelung.

In einer weiteren Ausgestaltung des Sensors wird ein Infrarot-Detektor verwendet, der die Konzentration des Polymers an der Unterseite der Bahn kontinuierlich misst.

Eine Bahn, die mit dem erfindungsgemäßen Verfahren hergestellt wird, weist sich dadurch aus, dass von der Oberseite der Bahn zur Unterseite der Bahn sich ein Gefälle des Polymergehaltes ergibt. Man spricht dann auch von einem Polymer-Gradienten. An der Oberseite der Bahn ist er maximal, während er zur Unterseite der Bahn hin abnimmt. Idealerweise lässt man das Polymer nur so weit durch das Granulat sickern, dass die unteren Partikel gerade so an ihrer Oberseite benetzt sind, dass sie nicht aus dem Verband der Bahn heraus fallen können.

In einer weiteren Ausgestaltung der Erfindung besteht das Granulat nicht aus Kork - oder einem anderen nicht-thermoplastischen Material - sondern aus einem elastomeren Material, wie beispielsweise Gummi.

Die erfindungsgemäße Bahn muss im Rahmen der Erfindung aber nicht nur aus dem Granulat und dem Polymer bestehen. Auf der Oberseite der Bahn können auch noch andere Materialien angebracht sein. So kann dort eine weitere thermoplastische Schicht auf dem Polymer angeordnet sein. Ferner können dort auch vorgefertigte Flächengebilde aus thermoplastischem oder nicht-thermoplastischem Material angeordnet sein. Diese Fliesen können mittels eines Handlingsystems vor dem Einlaufen zwischen die beiden Bänder der Fertigungsmaschine auf das Polymer aufgelegt werden. Beispielsweise können auf diese Weise Keramikplatten, Keramikfliesen und auch Filzplatten aufgelegt werden.

Die erfindungsgemäße Bahn zeichnet sich auch dadurch aus, dass ihre Unterseite nicht vollständig eben ist. Diese Unebenheit gleicht kleine Unebenheiten eines Fußbodens oder einer anderen Unterlage aus. Außerdem wird durch die Unebenheit auch der Ansaugeffekt verstärkt. Vorteilhaft ist eine Oberflächenrauigkeit von 0,1 bis 1,5 mm. Aber besonders vorteilhaft ist eine Oberflächenrauigkeit von 0,2 bis 0,6 mm. Diese Rauigkeit ist auch vorteilhaft für die Schalldämmung.

Im Folgenden soll die Erfindung anhand der Figuren näher erläutert werden. Es zeigen:
- Figur 1a: einen Querschnitt durch eine erfindungsgemäße Bahn;
- Figur 1b: ein Diagramm mit verschiedenen Gradientenverläufen;
- Figur 2: eine Fertigungsmaschine mit einem erfindungsgemäßen Sensor am Ende der Fertigungsmaschine.

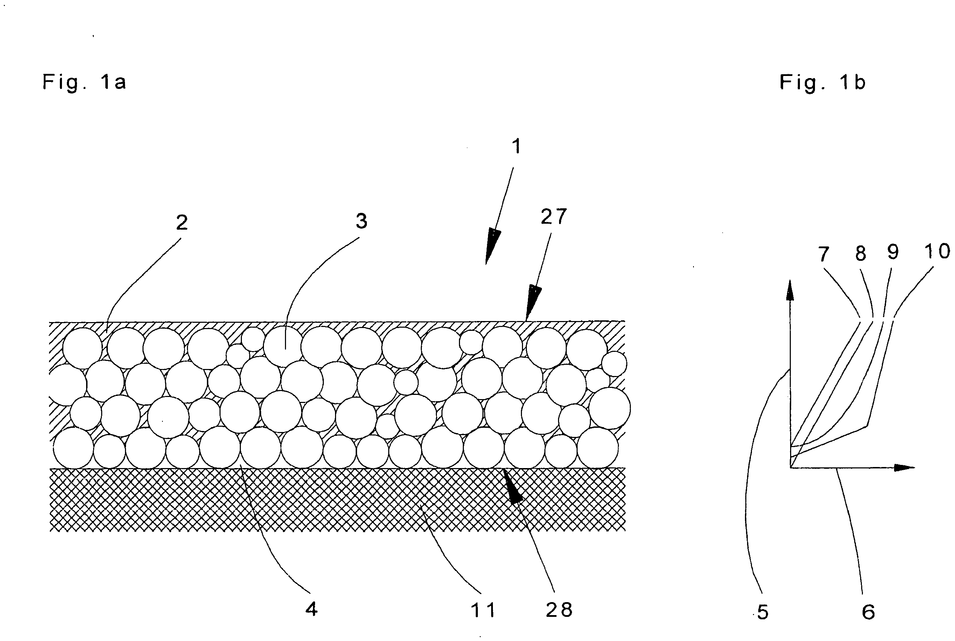

In der Figur 1a ist eine Bahn 1 auf einem Fußboden 11 liegend aufgeschnitten zu sehen. Ein Granulat 3 liegt in mehreren Lagen übereinander. An der Oberseite 27 der Bahn 1 und in lufterfüllten Zwischenräumen 4 zwischen den Partikeln des Granulats 3 befindet sich ein Polymer 2. An der Unterseite 28 der Bahn 1 ist jedoch kein Polymer 2 vorhanden.

Das neben der Figur 1a angeordnete Diagramm der Figur 1b ist mit seinem Koordinatenursprung auf die Höhe der Unterseite 27 der Bahn 1 aus der Figur 1a gesetzt worden. Die Achse 5 stellt die Bahndicke dar, während die Achse 6 den Polymergehalt angibt. Die Graphen 7 bis 10 zeigen vier verschiedene mögliche Gradientenverläufe. Der Gradientenverlauf 7 zeigt einen linearen Zusammenhang von Polymergehalt über die Dicke der Bahn 1, wobei der Graph nicht durch den Koordinatenursprung geht. D.h., dass im untersten Bereich der Bahn kein Polymer vorhanden ist. Der Graph 8 zeigt einen eher unrealistischen Gradienten, da ein Polymergehalt mit dem Wert Null genau an der Unterseite 28 nur schwer zu realisieren sein wird. Der Graph 9 hat einen parabelförmigen Verlauf, wobei auch hier der Nullpunkt nicht durch den Koordinatenursprung geht. Ein weiterer, möglicher Gradientenverlauf wird mit dem Graphen 10 gezeigt. Hier kann man sehen, dass der Polymergehalt zwar abschnittsweise linear ist, aber dennoch mit einer Knickstelle versehen ist.

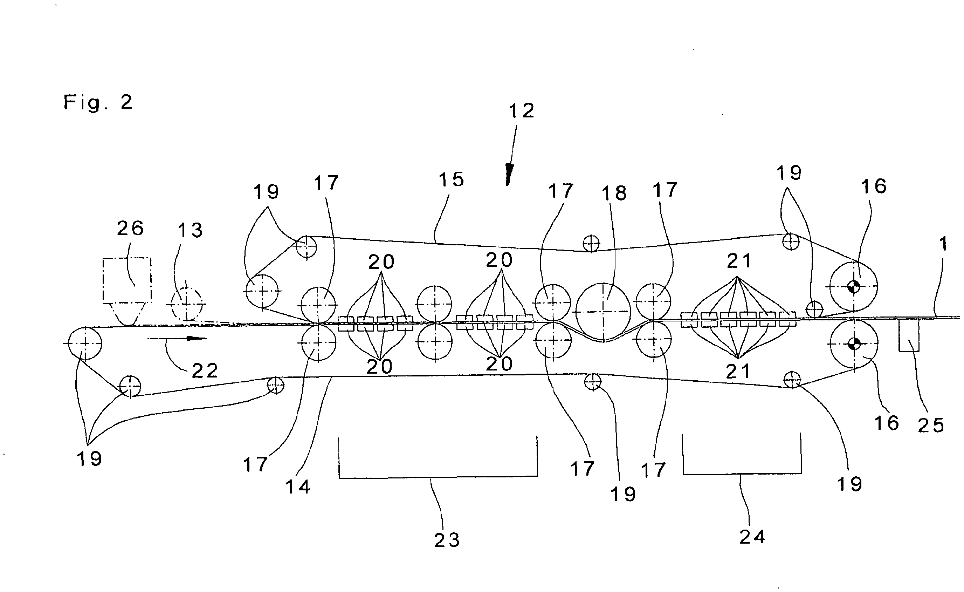

Bei der in der Figur 2 lediglich beispielhaft gezeigten Fertigungsmaschine 12 wird zwischen einem oberen Band 15 und einem unteren Band 14 mittels eines Streuers 26 ein Granulat 3 ausgebracht. Auf das Granulat 3 wird durch einen Abroller 13 noch ein Polymergewebe oder eine Polymerfolie ausgebracht. Falls zur Bildung der erfindungsgemäßen Bahn 1 Polymerfasern aufgetragen werden sollen, so kann man an dieser Stelle der Maschine 12 auch einen weiteren Streuer 26 anordnen. Beim weiteren Verlauf der Bahnherstellung bewegen sich die Bänder 14, 15 entlang einer Produktionsrichtung 22. Das Granulat 3 und das Polymer 2 werden mittels Presswalzen 17 gepresst, in einer Heizzone 23 von Heizelementen 20 erwärmt und in einer Kühlzone 24 von Kühlelementen 21 wieder abgekühlt. Eine Eintauchwalze 18 - zum so genannten Entlüften der Bahn 1 - ist hier nur optional dargestellt. Am Ende der Fertigungsmaschine 12 befindet sich unterhalb der Bahn 1 der Sensor 25. Der Sensor 25 muss bei diesem Maschinentyp am Ende angeordnet werden, weil dort die erste Stelle ist, wo die fertige Bahn 1 nicht mehr von einem unteren Band 14 bedeckt ist. Der Sensor 25 ist für die vorliegende Erfindung sehr hilfreich, weil mit seinen Ausgangssignalen eine genaue Regelung des Sinkprozesses des flüssigen Polymers 2 in das Granulat 3 hinein, was weiter vorn schon beschrieben ist, realisiert werden kann.

### Bezugszeichenliste

- 1: Bahn; Granulat-Polymerschicht
- 2: Polymer
- 3: Granulat
- 4: lufterfüllte Zwischenräume
- 5: Koordinate der Bahndicke
- 6: Koordinate des Polymergehaltes
- 7: Gradientenverlauf linear mit Versatz
- 8: Gradientenverlauf linear ohne Versatz
- 9: Gradientenverlauf parabolisch mit Versatz
- 10: Gradientenverlauf gestuft mit Versatz
- 11: Fußboden/Unterlage
- 12: Fertigungsmaschine
- 13: Abroller
- 14: unteres Band
- 15: oberes Band
- 16: Antriebswalzen
- 17: Presswalzen
- 18: Eintauchwalze
- 19: Umlenkwalzen
- 20: Heizelemente
- 21: Kühlelemente
- 22: Produktionsrichtung
- 23: Heizzone
- 24: Kühlzone
- 25: Sensor
- 26: Streuer
- 27: Oberseite
- 28: Unterseite

## Patentansprüche

1. Verfahren zur Herstellung einer Bahn (1) aus einem Granulat (3) und einem Polymer (2) in einem kontinuierlich arbeitenden thermoplastischen Herstellungsverfahren in einer Fertigungsmaschine (12), wobei auf dem ausgebrachten Granulat (3) das Polymer (2) ausgebracht wird, dann das Polymer (2) unter Wärmeeinwirkung geschmolzen wird und mittels wenigstens der Schwerkraft in das Granulat (3) hinein sinkt,
**dadurch gekennzeichnet,**
**dass** der Sinkprozess derart beeinflusst wird, dass im Wesentlichen bis zur Unterseite (28) der Bahn kein Polymer (2) hindurch dringt.

2. Verfahren nach Anspruch 1,
**dadurch gekennzeichnet,**
**dass** der Sinkprozess über eine Kombination der Parameter Produktionsgeschwindigkeit, Bahndicke, Granulat-Größe, Granulat-Verteilung, Granulat-Mischung, Polymermenge je Quadratmeter, Polymer-Temperatur, Polymer-Viskosität und Fertigungsdruck der Bänder (14, 15) der
Fertigungsmaschine (12) gesteuert wird.

3. Verfahren nach Anspruch 1,
**dadurch gekennzeichnet,**
**dass** der Sinkprozess über eine Sollgröße geregelt wird.

4. Verfahren nach Anspruch 3,
**dadurch gekennzeichnet,**
**dass** der Sinkprozess über die Sollgröße des Ansaugeffekts der Bahn (1) geregelt wird.

5. Sensor zur Durchführung des Verfahrens nach Anspruch 1 oder 3 oder 4,
**dadurch gekennzeichnet,**
**dass** ein Sensor (25), in Produktionsrichtung (22) betrachtet, am Ende eines unteren, umlaufenden Bandes (14) der Fertigungsmaschine (12) angeordnet ist.

6. Sensor nach Anspruch 5,
**dadurch gekennzeichnet,**
**dass** der Sensor (25) mindestens einen, zur Unterseite (28) der Bahn (1) hin gewandten, offenen Raum aufweist.

7. Sensor nach Anspruch 5,
**dadurch gekennzeichnet,**
**dass** der Sensor (25) als Infrarot-Sensor ausgebildet ist.

8. Bahn (1), bestehend im Wesentlichen aus einem Granulat (3) und einem Polymer (2), wobei das Polymer (2) mittels eines kontinuierlich arbeitenden thermoplastischen Herstellungsverfahrens in das Granulat (3) eingebracht wird, **dadurch gekennzeichnet,**
**dass** der Gehalt des Polymers (2) an der Unterseite (28) der Bahn (1) im Wesentlichen Null ist, während der Gehalt des Polymers (2) an der Oberseite (27) der Bahn (1) maximal ist, das heißt, dass der Gehalt von Polymer (2) im Granulat (3) von der Oberseite (27) zur Unterseite (28) der Bahn (1) betrachtet, ein Gefälle hat, also einen Gradienten darstellt.

9. Bahn (1) nach Anspruch 8,
**dadurch gekennzeichnet,**
**dass** das Granulat (3) im Wesentlichen aus einem elastomeren Material besteht.

10. Bahn (1) nach Anspruch 9,
**dadurch gekennzeichnet,**
**dass** das elastomere Material aus Kork besteht.

11. Bahn (1) nach Anspruch 9,
**dadurch gekennzeichnet,**
**dass** das elastomere Material aus Gummi besteht.

12. Bahn (1) nach mindestens einem der Ansprüche 8 bis 11, **dadurch gekennzeichnet,**
**dass** oberhalb der Granulat-Polymerschicht (1) mindestens eine weitere mit der Granulat-Polymerschicht (1) fest verbundene Schicht angeordnet ist.

13. Bahn (1) nach Anspruch 12,
**dadurch gekennzeichnet,**
**dass** diese Schicht aus thermoplastischem Material besteht.

14. Bahn (1) nach Anspruch 13,
**dadurch gekennzeichnet,**
**dass** das thermoplastische Material aus einzelnen Platten besteht.

15. Bahn (1) nach Anspruch 12,
**dadurch gekennzeichnet,**
**dass** diese Schicht aus Keramikplatten besteht.

16. Bahn (1) nach mindestens einem der Ansprüche 8 bis 15,
**dadurch gekennzeichnet,**
**dass** die Unterseite (28) der Granulat-Polymerschicht (1) eine Oberflächenrauigkeit von 0,1 bis 1,5 mm aufweist.

17. Bahn nach Anspruch 16,
**dadurch gekennzeichnet,**
**dass** die Unterseite (28) der Granulat-Polymerschicht (1) eine Oberflächenrauigkeit von 0,2 bis 0,6 mm aufweist.
